# EUROPEAN PATENT SPECIFICATION

(11) **EP 3 519 872 B1**
(45) Date of publication and mention of the grant of the patent: **09.06.2021**
(21) Application number: 16804916.1
(22) Date of filing: 27.09.2016
(51) Int. Cl.: G02B 6/38

(54) **CONNECTOR FOR PRE-CONNECTORIZED FIBER OPTIC CABLES**
VERBINDER FÜR VORKONNEKTORISIERTE GLASFASERKABEL
CONNECTEUR POUR CÂBLES À FIBRES OPTIQUES PRÉ-ÉQUIPÉS DE CONNECTEURS

(43) Date of publication of application: 07.08.2019
(73) Proprietor: Prysmian S.p.A., 20126 Milan (IT)
(72) Inventor: WAY, Rory John Geoffrey, 20126 Milan (IT); LE DISSEZ, Arnaud, 20126 Milan (IT); GRIFFITHS, Ian James, 20126 Milan (IT)
(74) Representative: Porta & Consulenti Associati S.p.A.
(86) International application number: PCT/IT2016/000221
(87) International publication number: WO 2018/061039

(56) References cited:
- WO-A1-2009/073500
- WO-A1-2013/106183
- US-A1- 2015 110 447

## Description

### Technical field

The present invention relates to a connector for mechanically and optically connecting two pre-connectorized fiber optic cables.

### Background art

Optical cables are widely used in a variety of data transmission applications to form networks, such as a FTTH ("Fiber To The Home") network wherein an optical access network provides a number of end customers with broadband communication services from operators.

Typically, in FTTH network are used pre-connectorized fiber optic cable, namely fiber optic cables having end portions pre-terminated with optical connectors. Pre-conenctorized fiber optic cables are factory assembled so that the time required in the field to install and connect the optical fibers is reduced. In addition, the quality of the resulting connection is enhanced since the factory conditions can be more readily controlled than the field conditions.

Throughout this description and in the following claims, the expression "pre-connectorized fiber optic cable" is used to indicate an optical fiber having, at least one end thereof, a factory assembled and tested optical connector, wherein the expression "optical fiber" is used to indicate an elongated optical element comprising an optical waveguide, constituted by an optically transmissive core, surrounded by a cladding. The optical waveguide is preferably covered by at least one protective coating layer. Two protective coating layers are preferably provided: a first coating layer (primary coating) is in direct contact with the optical waveguide, while a second coating layer (secondary coating) covers the primary coating. In addition, a buffer layer may cover the optical fiber. The buffer layer may be substantially in contact with the secondary coating (tight buffer) or it may consist of a small tube housing one or more optical fibers (loose buffer).

The mechanical and optical connection between pre-connectorized fiber optic cables should provide sufficient strain relief and protection against dust, moisture, dirt and other contaminants that can degrade the overall performance of the optical fibers, especially when the connection is done in harsh environment.

To this end, exist pre-connectorized fiber optic cables provided with ruggedized connectors already mounted at the ends of the pre-connectorized fiber optic cables and generally including ferrules provided with adapters having co-axially aligned ports for receiving the optical connector of the pre-connectorized fiber optical cables desired to be interconnected.

US 6,739,759 discloses a connector for mechanically and optically connecting pre-connectorized fiber optic cables comprising a shell assembly of a plurality of shells including a middle shell with an internal flange having a rectangular opening that closely receives and is fixed to a plex housing. Front and rear backshells extend in opposite directions from the middle shell and surround optic fiber cables that trail from plex optic fiber connectors, and with rubber grommets sealed to the optic fiber cables. US 2015/110447 A1 discloses an optical fiber connector according to the preamble of claim 1.

### Summary of the invention

The Applicant has observed that ruggedized connectors are expensive and, above all, proprietary and not standardized. Therefore, an installer willing to use ruggedized connectors must rely on products of a specific producer. However, pre-connectorized fiber optic cables are provided with standardized optical connector such as SC, FC, LC optical connectors and thus produced by a number of producers.

The Applicant has thus observer that the benefit of the installer to purchase pre-connectorized fiber optic cables from any producer or from different producers vanishes when ruggedized connectors are used.

The Applicant has also observed that, in connectors of the type disclosed by US 6,739,759, the mechanical strength of the connection between the pre-connectorized fiber optic cables and the connector just relies on the coupling of the pre-connectorized fiber optic cables to the plex assembly, as the intended rubber grommets sealed on the optic cables just realizes a sealing for avoiding dust and moisture to enter into the connector.

The Applicant has tackled the problem of connecting pre-connectorized fiber optic cables produced by any producer by ensuring both contaminants protection and mechanical strength of the connection.

The Applicant has found that by letting axially pass the optical connector of a pre-connectorized fiber optic cable through the connector for engaging an adaptor enclosed in the connector and by providing rigid teeth radially sliding for gripping the outer cable sheath, the pre-connectorized fiber optic cable can be joined to the adaptor and can be firmly held on the connector.

The Applicant realized that by providing the connector with a port cap attachable to a port body equipped with the adaptor, a seal can be radially arranged against the cable and further arranged into the port cap, so allowing the optical connector to be protected from contaminants.

Throughout this description and in the following claims, the term "tooth" is used for indicating any body having a not sharp free end configured for contacting and exerting a pressure on the outer sheath of an optic cable without engraving the same. The term "rigid" when referred to the term "tooth" is used for indicating a negligible deformation of the tooth during its normal operation.

Throughout this description and in the following claims, the terms "radial" and "axial" are used with reference to directions respectively perpendicular and parallel with an axis of the connector aligned with a main development direction of the connector.

The expressions "radially inner" and "radially outer" respectively indicate a positioning closer to and further from the aforementioned axis.

The present invention, therefore, relates to a connector for pre-connectorized fiber optic cables according to claim 1.

For the purpose of the present description and of the appended claims, "two" rigid teeth should be intended as "at least" two rigid teeth, namely a number of rigid teeth equal to two or more than two.

Preferably, the radial directions along which the two rigid teeth are movable are radially opposite, namely they are angularly spaced apart by 180° degrees.

The connector comprises a top cap mounted to a second end of said port cap and rotatable about a rotational axial axis relative to said port cap; actuating members for actuating said rigid teeth from the rest position to the gripping position being operative between said top cap and port cap. In this way, the rigid teeth can be actuated by the top cap by rotating the latter relative to the port cap.

Preferably, said top cap presents a radial aperture dimensioned for allowing an optical connector of a pre-connectorized fiber optic cable to axially pass through the top cap; said radial aperture being axially aligned to the radial aperture of said port cap. The extent of the radial aperture of the top cap is preferably equal to, or slightly minor of, the extent of the radial aperture of the port cap so as to avoid any hindering during the insertion of the optical connector into the connector assembly.

Preferably, said actuating members comprise rectilinear and radially oriented guiding elements provided on one from the port cap and the top cap and slidingly engaged by said rigid teeth.

Preferably, said actuating members further comprising eccentric guiding tracks provided on the other from the port cap and the top cap and slidingly engaged by said rigid teeth. (i.e. if the rectilinear and radially oriented guiding elements are provided on the port cap, the eccentric guiding tracks are provided on the top cap and vice versa.) In this way, during the rotation of the top cap the eccentric guiding tracks impart radial forces to the rigid teeth causing a movement thereof along the radially oriented guiding elements. The eccentricity of the eccentric guiding tracks should be intended as referred to the rotation axis of the top cap.

Preferably, said rectilinear and radially oriented guiding elements are radial grooves provided on a surface of the second end of the port cap facing said top cap.

Preferably, said eccentric guiding tracks are curved grooves provided on a surface of the top cap facing said second end of the port cap and extending from a radially outer position to a radially inner position.

Preferably, each rigid tooth comprises a protrusion slidingly engaging a respective radial groove.

Preferably, each rigid tooth comprises a pointer axially opposite to said protrusion engaging a respective curved groove. In this way, the teeth directly face and directly engage the rectilinear and radially oriented guiding elements and the eccentric guiding tracks, so ensuring a prompt and precise activation of the teeth.

Preferably, a radially outer surface of the top cap is provided with axial ribs. The axial ribs allow an easy twisting of the top cap relative to the port cap.

Preferably, said port cap comprises axial ribs on a radially outer surface configured to locate the port cap onto the port body.

Preferably, a radial inner end of each tooth comprises a plurality of protrusion configured for engaging the outer sheath of a optic cable; each protrusion being arch shaped with a radially inward oriented concavity. This preferred shape allows to increase the gripping action of the teeth on the outer sheath of the cable.

Preferably, said seal comprises a clamping element and a rubber grommet axially protruding from an end of the clamping element and configured for tightly contacting an outer sheath of a pre-connectorized fiber optic cable.

Preferably, the clamping element and the rubber grommet are cylindrical and present axial slits radially extending through their whole thickness. This allows the seal to be opened for receiving and enclosing the optic cable.

According to a first embodiment of the invention, said port body preferably comprises a threaded second end configured to be mounted to an enclosure. Preferably, the second end of the port body is configured for passing through a bore in the enclosure. According to this embodiment, a first pre-connectorized fiber optic cable is inserted into the connector and lies outside the enclosure and a second pre-connectorized fiber optic cable reaches the connector from the interior of the enclosure.

According to a second embodiment of the invention, the connector preferably comprises a further port cap configured to be mechanically coupled to a second end of said port body, a further seal acting within said further port cap and configured for sealing against an outer sheath of a second pre-connectorized fiber optic cable and further two rigid teeth movably along a radial direction between said rest position and said gripping position. According to this embodiment, two pre-connectorized fiber optic cables can be connected outside an enclosure.

For the purpose of the present description and of the appended claims, use of the "a" or "an" are employed to describe elements and components of the invention. This is done merely for convenience and to give a general sense of the invention. This description should be read to include one or at least one and the singular also includes the plural unless it is obvious that it is meant otherwise.

Further features and advantages of the present invention will appear more clearly from the following detailed description of preferred embodiments thereof, such description being provided merely by way of non-limiting example and being made with reference to the annexed figures wherein:

### Brief description of the drawings

- Figure 1 shows a perspective view of a first embodiment of a connector for pre-connectorized fiber optic cables according to the present invention;
- Figure 2 shows a further perspective view of the connector of figure 1 with some parts removed to better highlight others;
- Figure 3 shows a schematic longitudinal cross-section of the connector of figure 1;
- Figures 4 to 9 show some details of the connector of figure 1; and
- Figure 10 shows a schematic longitudinal cross section of a second embodiment of a connector for pre-connectorized fiber optic cables according to the present invention.

### Detailed description

A connector for pre-connectorized fiber optic cables according to the present invention is indicated with the reference number 10 in the annexed figures. The connector 10 is an optical interface aiming to optically and mechanically connect two pre-connectorized fiber optic cables.

The connector 10 is shown with a pre-connectorized fiber optic cable 100 mounted thereto. The illustrated pre-connectorized fiber optic cables 100 has a preassembled SC optical connector 101, however the connector 10 can be used for connecting pre-connectorized fiber optic cables having other types of optical connectors, such as LC, FC optical connectors and similar.

The connector 10 comprises a port body 20 enclosing an adaptor 21 configured for receiving the optical connector 101 of a pre-connectorized fiber optic cable. The adaptor 21 is designed for matching with a specific optical connector 101 of a pre-connectorized fiber optic cable. In the preferred embodiment, the adaptor 21 is integral with the port body 20.

The adaptor 21 is preferably positioned at an axial central portion of the port body 20. A guiding element 21a is positioned at a first end 22 of the port body 20 for helping in properly arranging the optical connector 101 on the adaptor 21.

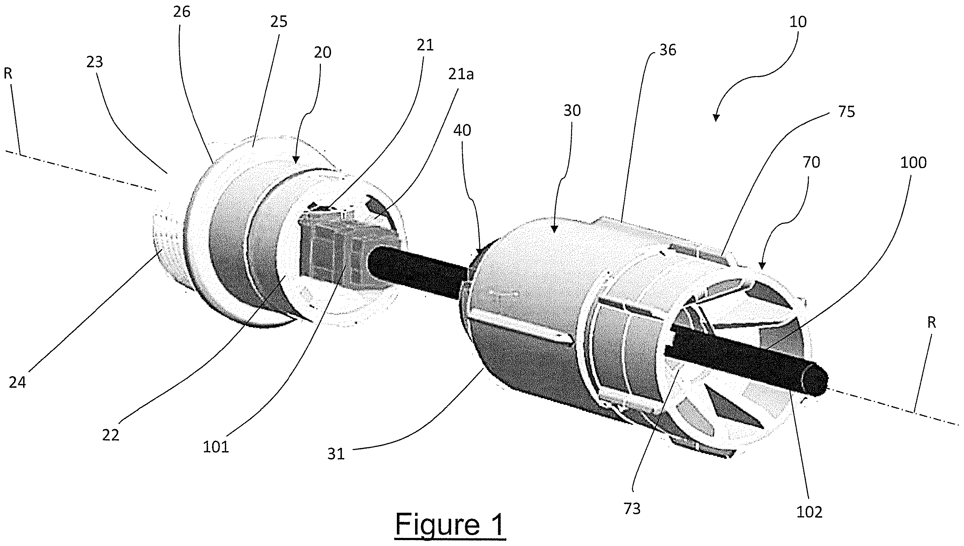

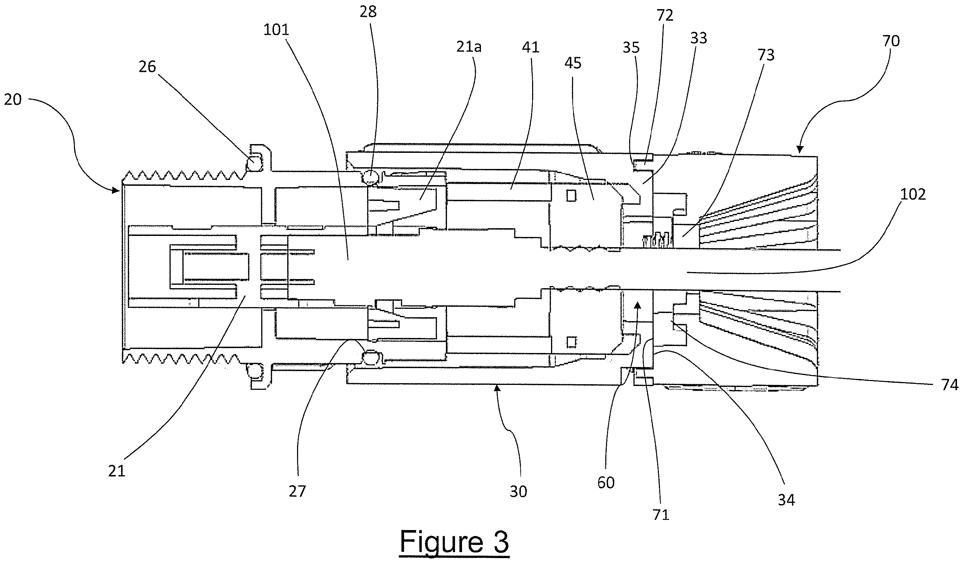

According to the embodiment of figures 1 and 3, the second end 23 of the port body 20 presents an outer treaded surface 24 configured for engaging a side bore of an enclosure (not illustrated) and for being fastened to the same (for example by a nut). At the end of the treaded surface 24 opposite to the free end of the same, the port body 20 comprises an annular shoulder 25 provided with an annular gasket 26 configured for sealing against the exterior surface of the enclosure presenting the cited bore, so preventing contaminants from entering into the enclosure.

The second end 23 of the port body 20 is configured for receiving the optical connector of a second pre-connectorized fiber optic cable to be connected to the adaptor 21.

The first end 22 of the port body 20 is configured to be joined to a first end 31 of a port cap 30. To this end, preferably the first end 22 of the port body 20 can be inserted into the first end 31 of the port cap 30. An annular groove 27 is provided on the external surface of the first end 22 of the port 20 and an annual gasket 28 is held into the annular groove 27. The annular gasket 28 radially contacts the inner surface of the first end 31 of the port cap 30, so that contaminants are prevented from entering into the port cap 30 and the port body 20.

The mechanical coupling between the port body 20 and the port cap 30 is performed by a bayonet mount, so that a rotation of just few degrees of the port cap 30 firmly joins the two parts.

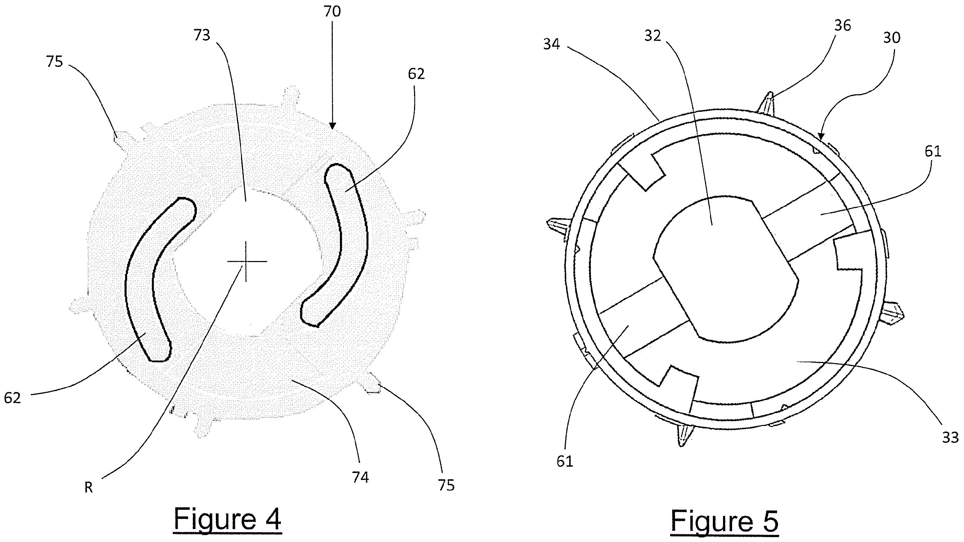

The port cap 30 is configured for allowing the optical connector 101 to pass through its interior and reach the adaptor 21. To this end, the port cap 30 is a hollow body and comprises a radial aperture 32 provided at a second end 34 of the port cap 30. The aperture 32 is preferably countershaped to the radial section of the optical connector 101, as illustrated on figure 5.

A seal 40 surrounds the outer sheath 102 of the optic cable and has a radial extent smaller than the inner radial extent of the port cap 30 for being inserted therein through the first end 31.

The seal 40 comprises a clamping element 41 having the shape of a hollow cylinder. The clamping element 41 is configured for being opened so allowing the optic cable to be inserted therein. To this end, the clamping element 41 comprises an axial slit 43 extending along its whole axial length and passing through its whole thickness. Radially opposite to the slit 43, the clamping element 41 comprises a hinge (not shown) allowing the edges of the slit 43 to be rotated about the hinge and thus distanced. When the edges of the slit 43 are distances, the optical cable can be introduced into the clamping element 41, as will be discussed below. The edges of the slit 43 are provided with snap fittings 44 for firmly closing the clamping element 41 once the optical cable is inserted into the clamping element 41.

The clamping element 41 cannot be inserted into the port body 20 since the radial extent of the latter is similar to the radial extent of the clamping element 41. A first end of the clamping element 41 abuts against the free edge of the first end 22 of the port body 20.

The seal 40 further comprises a rubber grommet 45 at a second end of the clamping element 41. The rubber grommet 45 is secured to, or is overmoulded onto, the clamping element 41 and is axially crossed by a slit (not shown) aligned to the slit 43 of the clamping element 41.

The rubber grommet 45 axially protrudes from the second end of the clamping element 41 and radially contact the outer sheath 102 of the optic cable. The rubber grommet 45 faces an interior annular abutment 33 of the port cap 30, so that the seal 40 is confined between the port body 20 and the annual abutment 33. The rubber grommet 45 tightly contacts the annular abutment 33 so creating a sealing preventing contaminants to enter the port cap 30.

At the second end 34 of the port cap 30 are provided two rigid teeth 50 radially sliding toward the outer sheath 102 of the optic cable.

Actuating members 60 are configured for moving the rigid teeth 50 between a rest position, wherein the two rigid teeth 50 are radially spaced apart for allowing the optical connector 101 to pass through the aperture 32, and a gripping position wherein the two rigid teeth 50 are radially approached for gripping the outer sheath 102 of the optic cable.

The actuating members 60 are arranged on an interface between the second end 34 of the port cap 30 and a first end 71 of a top cap 70.

The top cap 70 is rotatably joined to the port cap 30 for rotating about a rotational axis R axially oriented. The top cap 70 comprises circular hooks 72, emerging from the first end 71 thereof and arranged into a grooved undercut 35 of the second end 34 of the port cap 30 (figure 3), so allowing a mutual rotation of the two parts.

The top cap 70 presents a radial aperture 73 (figure 1) dimensioned for allowing the optical connector 101 to axially pass through the top cap 70. The radial aperture 73 is axially aligned to the aperture 32 of the port cap 30. Preferably, the radial aperture 73 is countershaped to the radial section of the optical connector 101, as illustrated on figure 4.

The actuating members 60 comprise two rectilinear and radially oriented grooves 61 provided on an interior annual abutment of the port cap 30 (figure 5). In the preferred embodiment, such an annular abutment is the same annular abutment 33 engaging the rubber grommet 45. The annual abutment 33 also defines the aperture 32 of the port cap 30. The grooves 61 are arranged on a surface of the annular abutment 33 opposite to the surface on which the rubber grommet 45 rests. In the preferred embodiment the two grooves 61 are radially opposed, i.e. they are angularly spaced by 180 degrees.

Each rectilinear and radially oriented grooves 61 is slidingly engaged by a respective rigid tooth 50. To this end, each rigid tooth 50 comprises a protrusion 52 matching the shape of the groove 61. The protrusion 52 is located at a first axial end 51 of the tooth. The radial extent of each rigid tooth 50 is equal to the radial extent of the groove 61, so that, when in rest position, the teeth are fully accommodated in the grooves 61 without obstructing the aperture 32.

The actuating members 60 further comprise curved grooves 62, provided on a surface 74 of the top cap 70 facing the annular abutment 33 of the port cap 30. The surface 74 is annular and surrounds the aperture 73 of the top cap 70. The curved grooves 62 defines tracks on the surface 74 which are eccentric with respect to the rotational axis R. To this end, each curved groove 62 extends from an outer radial position to an inner radial position on the surface 74.

Each curved groove 62 is engaged by a respective tooth 50. Each tooth 50 comprises a pointer 53 provided on a second axial end 54 opposite to the first axial end 51 of the tooth 50. The pointer 53 presents a substantially cylindrical shape and emerges from a surface of the second axial end 54 of the tooth 50. The pointer 53 slidingly engages a respective curved groove 62.

As described above, each tooth simultaneously engages a rectilinear groove 61 on the port cap 30 and a curved groove 62 on the top cap 70. A rotation of the top cap 70 determines a rotation of the curved grooves 62 which, due to their eccentricity, exert forces on the teeth. The teeth 50 forcibly move along the rectilinear grooves 61 so radially approaching the outer sheath 102 of the optic cable.

The lengths of the curved grooves 62 are set for shifting the teeth 50 of amounts suitable to firmly hold the optic cable without damaging the same.

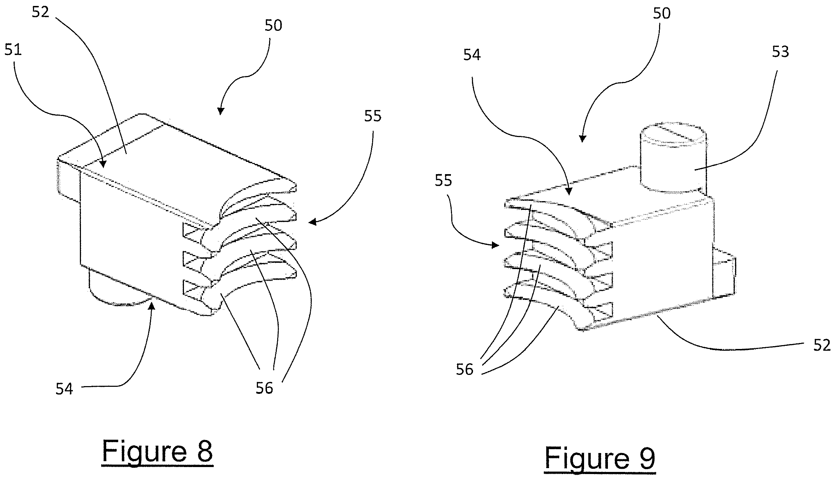

For better gripping the outer sheath 102 of the optic cable, the radial inner end of each tooth 50 comprises a plurality of protrusion 56 configured for engaging the outer sheath 102 of the cable. Each protrusion 56 is arch shaped with a radially inward oriented concavity, as illustrated in figures 8 and 9.

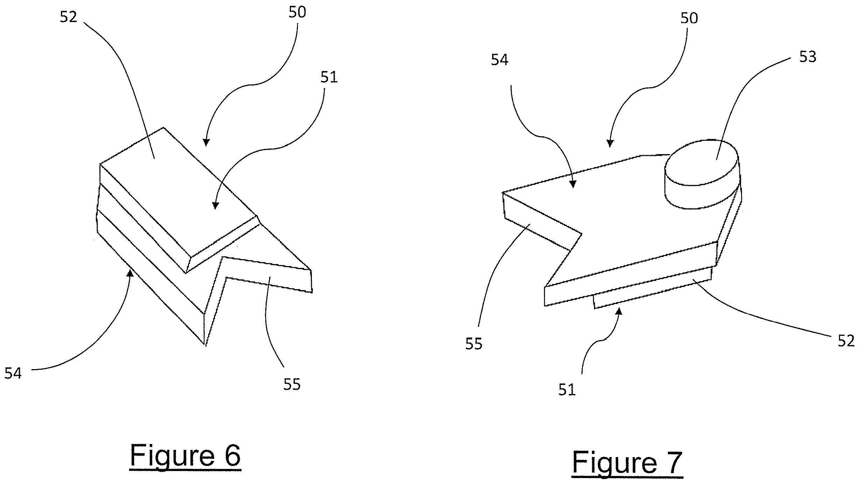

In an alternative embodiment shown in figures 6 and 7" the rigid teeth 50 comprises a "V shaped" radially inner ends 55, so optimizing the contact area between each tooth and the outer sheath 102 of the optic cable.

On the radially outer surface of the top cap 70 are provided axial ribs 75 aiming to facilitate twisting of the top cap 70 and port cap 30 and to engage the rigid teeth 50. Both the top cap 70 and the port cap 30 comprise markers (not shown) for aiding location of the rigid teeth 50.

On the radially outer surface of the port cap 30 are provided axial ribs 36 for helping locating the port cap 30 onto the port body 20 and indicating a proper engagement of the bayonet mount. The port body 20 comprises markers (not shown) as references for the axial ribs 36.

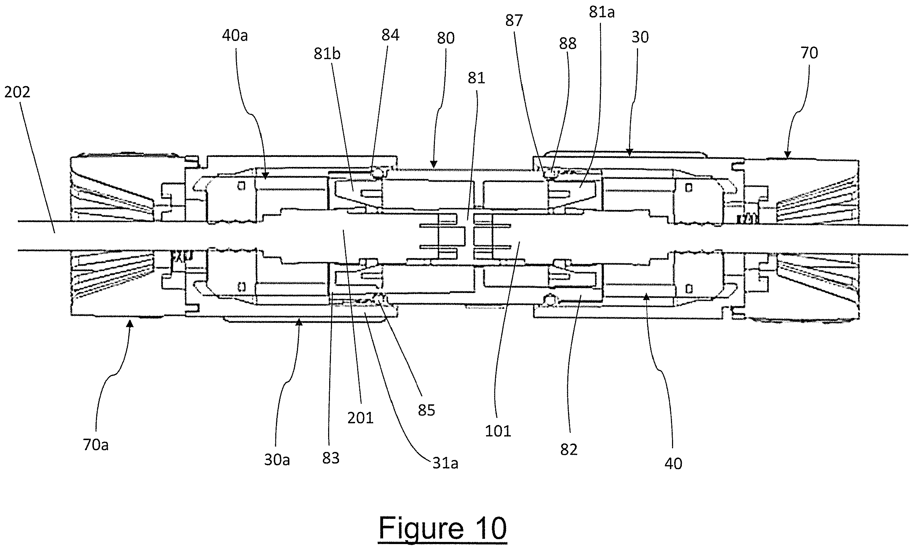

In figure 10 an alternative embodiment is shown. In this embodiment, the connector 10 can be used independently, namely without being attached to an enclosure, for optically and mechanically connecting two pre-connectorized fiber optic cables.

The port body 80 of the embodiment of figure 10 comprises a first end 82 substantially identical to the first end 22 of the port body 20 of the first embodiment, therefore enclosing a guiding element 81a aiming to facilitate the connection of the optical connector 101 to the adaptor 81. The first end 82 of the port body 80 is configured to receive the first end 31 of the port cap 30.

The first end 82 of the port body 80 is inserted into the first end 31 of the port cap 30. An annular groove 87 is provided on the external surface of the first end 82 of the port 80 and an annual gasket 88 is arranged into the annular groove 87. The annular gasket 88 radially contacts the inner surface of the first end 31 of the port cap 30, so that contaminants are prevented from entering into the port cap 30 and the port body 80.

The embodiment of figure 8 comprises the same port cap 30, seal 40, top cap 70, actuating members 60 and rigid teeth 50 of the embodiment of figures 1 and 3 above described.

The second end 83 of the port body 80 encloses a further guiding element 81b and is configured to receive a first end 31a of a further port cap 30a. The further guiding element 81b is configured for helping in inserting the optical connector 201 of a second pre-connectorized fiber optic cable 200 into the adaptor 81.

The port body 80 is thus configured for receiving and optically connecting two pre-connectorized fiber optic cables.

As the connector 10 of figure 10 is independent from an enclosure, the second end 83 of the port body 80 is inserted into the first end 31a of the further port cap 30. An annular groove 84 is provided on the external surface of the second end 83 of the port 80 and an annual gasket 85 is arranged into the annular groove 84. The annular gasket 85 radially contacts the inner surface of the first end 31a of the further port cap 30a, so that contaminants are prevented from entering into the further port cap 30a and the port body 80.

The further port cap 30a is identical to the already described port cap 30. In the embodiment of figure 10, the connector 10 comprises a further seal 40a, a further top cap 70a, further actuating members 60a and further rigid teeth (not shown) which are identical to the seal 40, the top cap 70, the actuating members 60 and the rigid teeth 50 above described.

For using the connector 10, the port body 20, 80 is initially detached from the port cap 30, so exposing the adaptor 21, 81. The port cap 30 and the top cap 70 are already rotationally coupled.

The pre-connectorized fiber optic cable can be introduced into the top cap 70 and port cap 30 by pushing the optical connector 101 through the apertures 73, 32 provided in the top cap 70 and port cap 30.

Before pushing the optical connector 101, the shapes of the cited apertures 73, 32 provided in the top cap 70 and port cap 30 must match each other in order to freely let pass the optical connector 101.

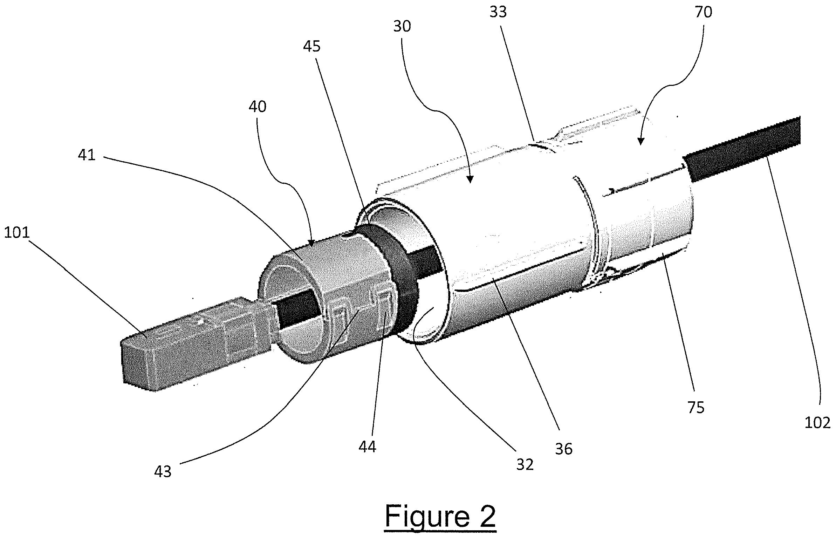

The angular position between the top cap 70 and the port cap 30 allowing the passage of the optical connector 101 is set for positioning the rigid teeth 50 in the rest position. Therefore, the optical connector 101 can freely pass through the top cap 70 and the port cap 30 for emerging from the first end 31 of the port cap 30, as illustrated in figure 2.

Thereafter the seal 40 can be mounted around the outer sheath 102 of the optic cable in a region of the pre-connectorized fiber optic cable comprised between the optical connector 101 and the port cap 30, as indicated in figure 2.

To this end, the snap fittings 44 of the clamping element 41 must be unhooked and the clamping element 41, along with the rubber grommet 45, can be opened for letting the optic cable enter the seal 40. Then the snap fittings 44 can be hooked for allowing the rubber grommet 45 to seal against the outer sheath 102 of the optic cable.

Thereafter, the optical connector 101 can be clamped to the adaptor 21, 81.

When the optical connector 101 is attached to the adaptor 21, 81, the port body 20, 80 can be pushed towards the port cap 30. During this operation, the first end 22, 82 of the port body 80 contacts the first end of the clamping element 41, so pushing the latter into the port cap 30.

The port cap 20, 80 and the port cap 30 are then coupled by the bayonet mount.

As above discussed, the axial length of the seal 40 is set for contacting both the first end 22, 82 of the port body 20, 80 and the annular abutment 33 of the port cap 30. Therefore, when the port body 20, 80 is fixedly coupled to the port cap 30, the rubber grommet 45 of the seal 40 fastens the annular abutment 33 and seals the opening 32 of the port cap 30.

At this point, the top cap 70 can be rotated about its rotational axis R so that the rigid teeth 50 reach the gripping position for firmly holding the optic cable and preventing accidental retraction of the optical connector 101.

In the embodiment of figures 1 and 3, the port body 20 is preferably already mounted to the enclosure before the port body 20 and the port cap 30 are joined. This operation is done by arranging the threaded end 24 of the port body 20 in a bore of the enclosure and by tightening a nut on the threaded end 24. A second optical connector is connected to the adaptor 21 in the port body 20.

In the embodiment of figure 10, the above operations are repeated on the further port cap 30a, seal 40a, top cap 70a and rigid teeth 50a, so that a second pre-connectorized fiber optic cable can be coupled to the pre-connectorized fiber optic cable already put in place.

## Claims

1. Connector (10) for pre-connectorized fiber optic cables comprising:
a port body (20, 80) and an adaptor (21, 81) configured to receive an optical connector (101, 201) of a pre-connectorized fiber optic cable, said adaptor (21, 81) being mechanically held by said port body (20, 80);
a port cap (30) having a radial aperture (32) dimensioned for allowing an optical connector (101) of a pre-connectorized fiber optic cable to axially pass through the port cap (30), the port cap (30) having a first end (31) configured for being mechanically coupled to a first end (22, 82) of said port body (20, 80);
a seal (40) acting within said port cap (30) and configured for sealing against an outer sheath (102) of a pre-connectorized fiber optic cable; **characterised in that** the connector further comprises a top cap (70) mounted to a second end (34) of said port cap (30) and rotatable about an axial rotational axis (R) relative to said port cap (30) and **in that** two rigid teeth (50) are movable along radial directions between a rest position, wherein the two rigid teeth (50) are radially spaced apart for allowing an optical connector (101) of a pre-connectorized fiber optic cable to pass through the port cap (30), and a gripping position wherein the two rigid teeth (50) are radially approached for gripping an outer sheath (102) of a pre-connectorized fiber optic cable, actuating members (60) for actuating said rigid teeth (50) from the rest position to the gripping position being operative between said top cap (70) and port cap (30).

2. Connector (10) according to claim 1, wherein said top cap (70) presents a radial aperture (73) dimensioned for allowing an optical connector (101) of a pre-connectorized fiber optic cable to axially pass through the top cap (70); said radial aperture (73) being axially aligned to the radial aperture (32) of said port cap (30).

3. Connector (10) according to claim 1 or 2, wherein said actuating members (60) comprise rectilinear and radially oriented guiding elements (61) provided on one from the port cap (30) and the top cap (70) and slidingly engaged by said rigid teeth (50).

4. Connector (10) according to claim 3, wherein said actuating members (60) further comprises eccentric guiding tracks (62) provided on the other from the port cap (30) and the top cap (70) and slidingly engaged by said rigid teeth (50).

5. Connector (10) according to claim 3 or 4, wherein said rectilinear and radially oriented guiding elements (61) are radial grooves provided on a surface of the second end (34) of the port cap (30) facing said top cap (70).

6. Connector (10) according to claim 4, wherein said eccentric guiding tracks (62) are curved grooves provided on a surface (74) of the top cap (70) facing said second end (34) of the port cap (30) and extending from a radially outer position to a radially inner position.

7. Connector (10) according to any of claims from 3 to 6, wherein each rigid tooth (50) comprises a protrusion (52) slidingly engaging a respective radial groove (61).

8. Connector (10) according to claim 6 and 7, wherein each rigid tooth (50) comprises a pointer (53) axially opposite to said protrusion (52) engaging a respective curved groove (62).

9. Connector (10) according to any of claims from 1 to 8, wherein a radially outer surface of the top cap (70) is provided with axial ribs (75).

10. Connector (10) according to any of claims from 1 to 9, wherein said port cap (30) comprises axial ribs (36) on a radially outer surface configured to locate the port cap (30) onto the port body (20).

11. Connector (10) according to any of the previous claims, wherein a radial inner end (55) of each tooth (50) comprises a plurality of protrusion (56) configured for engaging the outer sheath (102) of a optic cable; each protrusion (56) being arch shaped with a radially inward oriented concavity.

12. Connector (10) according to any of the previous claims, wherein said seal (40) comprises a clamping element (41) and a rubber grommet (45) protruding from an end of the clamping element (41) and configured for tightly contacting an outer sheath (102) of a pre-connectorized fiber optic cable.

13. Connector (10) according to claim 12, wherein the clamping element (41) and the rubber grommet (45) are cylindrical and present axial slits (43) radially extending through their whole thickness.

14. Connector (10) according to any of the previous claims, wherein said port body (20) comprises a threaded second end (24) configured to be mounted to an enclosure.

15. Connector (10) according to any of claims from 1 to 13, comprising a further port cap (30a) configured to be mechanically coupled to a second end (83) of said port body (80), a further seal (40a) acting within said further port cap (30) and configured for sealing against an outer sheath (202) of a second pre-connectorized fiber optic cable and further two rigid teeth (50) movably along a radial direction between said rest position and said gripping position.

## Patentansprüche

1. Verbinder (10) für vorverbundene faseroptische Kabel, umfassend:
einen Portkörper (20, 80) und einen Adapter (21, 81), der so konfiguriert ist, dass er einen optischen Verbinder (101, 201) eines vorverbundenen faseroptischen Kabels aufnehmen kann, wobei der Adapter (21, 81) mechanisch von dem Portkörper (20, 80) gehalten wird;
eine Portkappe (30) mit einer radialen Öffnung (32), die so dimensioniert ist, dass ein optischer Verbinder (101) eines vorverbundenen faseroptischen Kabels axial durch eine Portkappe (30) hindurchtreten kann, wobei die Portkappe (30) ein erstes Ende (31) aufweist, das so konfiguriert ist, dass es mechanisch mit einem ersten Ende (22, 82) des Portkörpers (20, 80) gekoppelt ist;
eine Dichtung (40), die innerhalb der Portkappe (30) wirkt und so konfiguriert ist, dass sie gegen einen Außenmantel (102) eines vorverbundenen faseroptischen Kabels abdichtet;
**dadurch gekennzeichnet, dass** der Verbinder ferner eine obere Kappe (70) umfasst, die an einem zweiten Ende (34) der Portkappe (30) angebracht und um eine axiale Drehachse (R) relativ zu der Portkappe (30) drehbar ist, und dass zwei starre Zähne (50) entlang radialer Richtungen zwischen einer Ruheposition beweglich sind, wobei die zwei starren Zähne (50) radial voneinander entfernt sind, damit ein optischer Verbinder (101) eines vorverbundenen faseroptischen Kabels durch die Portkappe (30) hindurchtreten kann, und einer Greifposition, in der die beiden starren Zähne (50) radial angenähert sind, um eine äußere Umhüllung (102) eines vorverbundenen faseroptischen Kabels zu ergreifen, bewegbar sind, wobei Betätigungselemente (60) zum Betätigen der starren Zähne (50) aus der Ruheposition in die Greifposition vorgesehen sind, die zwischen der oberen Kappe (70) und der Anschlusskappe (30) wirksam sind.

2. Verbinder (10) nach Anspruch 1, wobei die obere Kappe (70) eine radiale Öffnung (73) aufweist, die so dimensioniert ist, dass ein optischer Verbinder (101) eines vorverbundenen faseroptischen Kabels axial durch die obere Kappe (70) hindurchgehen kann; wobei die radiale Öffnung (73) axial auf die radiale Öffnung (32) der Anschlusskappe (30) ausgerichtet ist.

3. Verbinder (10) nach Anspruch 1 oder 2, wobei die Betätigungselemente (60) geradlinige und radial ausgerichtete Führungselemente (61) umfassen, die an der Anschlusskappe (30) oder der oberen Kappe (70) vorgesehen sind und gleitend mit den starren Zähnen (50) in Eingriff stehen.

4. Verbinder (10) nach Anspruch 3, wobei die Betätigungselemente (60) ferner exzentrische Führungsbahnen (62) umfassen, die auf der anderen Seite der Anschlusskappe (30) und der oberen Kappe (70) vorgesehen sind und mit den starren Zähnen (50) gleitend in Eingriff stehen.

5. Verbinder (10) nach Anspruch 3 oder 4, wobei die geradlinigen und radial ausgerichteten Führungselemente (61) radiale Rillen sind, die auf einer Oberfläche des zweiten Endes (34) der Anschlusskappe (30) angeordnet sind, die der oberen Kappe (70) zugewandt ist.

6. Verbinder (10) nach Anspruch 4, wobei die exzentrischen Führungsbahnen (62) gekrümmte Nuten sind, die auf einer Oberfläche (74) der oberen Kappe (70) vorgesehen sind, die dem zweiten Ende (34) der Anschlusskappe (30) zugewandt ist und sich von einer radial äußeren Position zu einer radial inneren Position erstreckt.

7. Verbinder (10) nach einem der Ansprüche 3 bis 6, wobei jeder starre Zahn (50) einen Vorsprung (52) aufweist, der gleitend in eine jeweilige Radialnut (61) eingreift.

8. Verbinder (10) nach Anspruch 6 und 7, wobei jeder starre Zahn (50) einen Zeiger (53) aufweist, der axial gegenüber dem Vorsprung (52) angeordnet ist und in eine entsprechende gekrümmte Nut (62) eingreift.

9. Verbinder (10) nach einem der Ansprüche 1 bis 8, wobei eine radial äußere Oberfläche der oberen Kappe (70) mit axialen Rippen (75) versehen ist.

10. Verbinder (10) nach einem der Ansprüche 1 bis 9, wobei die Anschlusskappe (30) axiale Rippen (36) an einer radial äußeren Oberfläche aufweist, die so konfiguriert sind, dass sie die Anschlusskappe (30) auf dem Anschlusskörper (20) positionieren.

11. Verbinder (10) nach einem der vorhergehenden Ansprüche, wobei ein radiales inneres Ende (55) jedes Zahns (50) eine Mehrzahl von Vorsprüngen (56) aufweist, die zum Eingriff in die äußere Hülle (102) eines optischen Kabels konfiguriert sind, wobei jeder Vorsprung (56) bogenförmig mit einer radial nach innen gerichteten Konkavität ist.

12. Verbinder (10) nach einem der vorhergehenden Ansprüche, wobei die Dichtung (40) ein Klemmelement (41) und eine Gummitülle (45) umfasst, die von einem Ende des Klemmelements (41) vorsteht und so konfiguriert ist, dass sie einen Außenmantel (102) eines vorverbundenen faseroptischen Kabels fest berührt.

13. Verbinder (10) nach Anspruch 12, wobei das Klemmelement (41) und die Gummitülle (45) zylindrisch sind und axiale Schlitze (43) aufweisen, die sich radial durch ihre gesamte Dicke erstrecken.

14. Verbinder (10) nach einem der vorhergehenden Ansprüche, wobei der Anschlusskörper (20) ein mit einem Gewinde versehenes zweites Ende (24) aufweist, das für die Montage an einem Gehäuse konfiguriert ist.

15. Verbinder (10) nach einem der Ansprüche 1 bis 13, umfassend eine weitere Portkappe (30a), die so konfiguriert ist, dass sie mechanisch mit einem zweiten Ende (83) des Portkörpers (80) gekoppelt werden kann, eine weitere Dichtung (40a), die innerhalb der weiteren Portkappe (30) wirkt und so konfiguriert ist, dass sie gegen einen Außenmantel (202) eines zweiten vorverbundenen faseroptischen Kabels abdichtet, und ferner zwei starre Zähne (50), die entlang einer radialen Richtung zwischen der Ruheposition und der Greifposition bewegbar sind.

## Revendications

1. Connecteur (10) pour câbles à fibre optique prééquipés d'un connecteur comprenant :
un corps d'orifice (20, 80) et un adaptateur (21, 81) configuré pour recevoir un connecteur optique (101, 201) d'un câble à fibre optique pré-équipé d'un connecteur, ledit adaptateur (21, 81) étant mécaniquement maintenu par ledit corps d'orifice (20, 80) ;
un capuchon d'orifice (30) ayant une ouverture radiale (32) dimensionnée pour permettre à un connecteur optique (101) d'un câble à fibre optique pré-équipé d'un connecteur de traverser axialement le capuchon d'orifice (30), le capuchon d'orifice (30) ayant une première extrémité (31) configurée pour être mécaniquement couplée à une première extrémité (22, 82) dudit corps d'orifice (20, 80) ;
un joint d'étanchéité (40) agissant à l'intérieur dudit capuchon d'orifice (30) et configuré pour assurer une étanchéité vis-à-vis d'une gaine externe (102) d'un câble à fibre optique pré-équipé d'un connecteur ;
**caractérisé en ce que** le connecteur comprend en outre un capuchon supérieur (70) monté sur une seconde extrémité (34) dudit capuchon d'orifice (30) et apte à tourner autour d'un axe de rotation axial (R) par rapport audit capuchon d'orifice (30) et **en ce que** deux dents rigides (50) sont mobiles le long de directions radiales entre une position de repos, dans laquelle les deux dents rigides (50) sont radialement espacées pour permettre à un connecteur optique (101) d'un câble à fibre optique à fibre optique pré-équipé d'un connecteur de traverser le capuchon d'orifice (30), et une position de saisie dans laquelle les deux dents rigides (50) sont radialement rapprochées pour saisir une gaine externe (102) d'un câble à fibre optique pré-équipé d'un connecteur, des organes d'actionnement (60) pour actionner lesdites dents rigides (50) de la position de repos à la position de saisie fonctionnant entre lesdits capuchon supérieur (70) et capuchon d'orifice (30).

2. Connecteur (10) selon la revendication 1, dans lequel ledit capuchon supérieur (70) présente une ouverture radiale (73) dimensionnée pour permettre à un connecteur optique (101) d'un câble à fibre optique à fibre optique pré-équipé d'un connecteur de traverser axialement le capuchon supérieur (70) ; ladite ouverture radiale (73) étant axialement alignée avec l'ouverture radiale (32) dudit capuchon d'orifice (30).

3. Connecteur (10) selon la revendication 1 ou 2, dans lequel lesdits organes d'actionnement (60) comprennent des éléments de guidage (61) rectilignes et orientés radialement, ménagés sur l'un parmi le capuchon d'orifice (30) et le capuchon supérieur (70) et mis en prise de manière coulissante par lesdites dents rigides (50) .

4. Connecteur (10) selon la revendication 3, dans lequel lesdits organes d'actionnement (60) comprennent en outre des pistes de guidage excentriques (62) ménagées sur l'autre parmi le capuchon d'orifice (30) et le capuchon supérieur (70) et mises en prise de manière coulissante par lesdites dents rigides (50).

5. Connecteur (10) selon la revendication 3 ou 4, dans lequel lesdits éléments de guidage (61) rectilignes et orientés radialement sont des rainures radiales ménagées sur une surface de la seconde extrémité (34) du capuchon d'orifice (30) faisant face audit capuchon supérieur (70).

6. Connecteur (10) selon la revendication 4, dans lequel lesdites pistes de guidage excentriques (62) sont des rainures incurvées ménagées sur une surface (74) du capuchon supérieur (70) faisant face à ladite seconde extrémité (34) du capuchon d'orifice (30) et s'étendant d'une position radialement externe à une position radialement interne.

7. Connecteur (10) selon l'une quelconque des revendications 3 à 6, dans lequel chaque dent rigide (50) comprend une saillie (52) mise en prise de manière coulissante avec une rainure radiale (61) respective.

8. Connecteur (10) selon la revendication 6 et 7, dans lequel chaque dent rigide (50) comprend un pointeur (53) axialement opposé à ladite saillie (52) mis en prise avec une rainure incurvée (62) respective.

9. Connecteur (10) selon l'une quelconque des revendications 1 à 8, dans lequel une surface radialement externe du capuchon supérieur (70) est munie de nervures axiales (75).

10. Connecteur (10) selon l'une quelconque des revendications 1 à 9, dans lequel ledit capuchon d'orifice (30) comprend des nervures axiales (36) sur une surface radialement externe configurées pour positionner le capuchon d'orifice (30) sur le corps d'orifice (20).

11. Connecteur (10) selon l'une quelconque des revendications précédentes, dans lequel une extrémité interne radiale (55) de chaque dent (50) comprend une pluralité de saillies (56) configurées pour être en prise avec la gaine externe (102) d'un câble optique ; chaque saillie (56) étant en forme d'arc avec une concavité orientée radialement vers l'intérieur.

12. Connecteur (10) selon l'une quelconque des revendications précédentes, dans lequel ledit joint d'étanchéité (40) comprend un élément de serrage (41) et un œillet en caoutchouc (45) faisant saillie à partir d'une extrémité de l'élément de serrage (41) et configurée pour être en contact hermétique avec une gaine externe (102) d'un câble à fibre optique pré-équipé d'un connecteur.

13. Connecteur (10) selon la revendication 12, dans lequel l'élément de serrage (41) et l'oeillet en caoutchouc (45) sont cylindriques et présentent des fentes axiales (43) s'étendant radialement à travers la totalité de leur épaisseur.

14. Connecteur (10) selon l'une quelconque des revendications précédentes, dans lequel ledit corps d'orifice (20) comprend une seconde extrémité filetée (24) configurée pour être montée sur un coffret.

15. Connecteur (10) selon l'une quelconque des revendications 1 à 13, comprenant un capuchon d'orifice (30a) supplémentaire configuré pour être mécaniquement couplé à une seconde extrémité (83) dudit corps d'orifice (80), un joint d'étanchéité (40a) supplémentaire agissant à l'intérieur dudit capuchon d'orifice (30) supplémentaire et configuré pour assurer une étanchéité vis-à-vis d'une gaine externe (202) d'un second câble à fibre optique pré-équipé d'un connecteur et deux dents rigides (50) supplémentaires mobiles le long d'une direction radiale entre ladite position de repos et ladite position de saisie.
